Europäisches Patentamt

European Patent Office

Office européen des brevets

(11) Veröffentlichungsnummer: **0 251 038**

**A1**

## (12) EUROPÄISCHE PATENTANMELDUNG

(21) Anmeldenummer: 87108721.9

(22) Anmeldetag: 16.06.87

(51) Int. Cl.⁴: **H04M 3/00** , H04M 19/00

(30) Priorität: 30.06.86 DE 3621890

(43) Veröffentlichungstag der Anmeldung:
07.01.88 Patentblatt 88/01

(84) Benannte Vertragsstaaten:
AT BE CH DE FR GB IT LI NL SE

(71) Anmelder: **Siemens Aktiengesellschaft Berlin und München**
**Wittelsbacherplatz 2**
**D-8000 München 2(DE)**

Anmelder: **SGS MICROELETTRONICA S.p.A.**
**Stradale Primosole 50**
**I-95121 Catania(IT)**

(72) Erfinder: **Rudolf, Hans-Werner, Dr.rer.nat.**
**Wörthstrasse 13**
**D-8000 München 80(DE)**
Erfinder: **Stader, Harald, Dipl.-Ing.**
**Starnbergerstrasse 21**
**D-8000 München 71(DE)**
Erfinder: **Siligoni, Marco, Dr.-Ing.**
**Via Zara 9**
**I-20010 Vittuone(IT)**

(74) Vertreter: **Mehl, Ernst, Dipl.-Ing. et al**
**Postfach 22 01 76**
**D-8000 München 22(DE)**

(54) Schaltungsanordnung zur Trennung der Adern einer Teilnehmeranschlussleitung von der Speiseschaltung.

(57) Die Speiseschaltung enthält eine Spannungsquelle für eine negative und eine positive Versorgungsspannung, deren Endstufen Operationsverstärker (Opa, OPb) sind. Die Abtrennung der Adern der Teilnehmeranschlußleitung erfolgt durch Abtrennen der Bezugsspannung an den Steuereingängen der Endstufentransistoren dieser Operationsverstärker.

## Schaltungsanordnung zur Trennung der Adern einer Teilnehmeranschlußleitung von der Speiseschaltung

Die Erfindung betrifft eine Schaltungsanordnung zur Trennung der beiden Adern einer Teilnehmeranschlußleitung eines digitalen Zeitmultiplex-Fernmeldenetzes, die über eine Teilnehmeranschlußschaltung mit elektronischer Schnittstellenschaltung an eine Vermittlungsstelle des Fernmeldenetzes angeschlossen ist von der jeweils eine negative bzw. eine positive Versorgungsspannung liefernde Spannungsquelle für jede der beiden Adern umfassenden und Bestandteil der Schnittstellenschaltung darstellenden Speiseschaltung.

Die Abtrennung der Teilnehmerleitungsadern von der Speiseschaltung ist dann erforderlich, wenn zwischen den beiden Adern im Verlauf der Teilnehmeranschlußleitung oder im Endgerät ein Kurzschluß besteht oder wenn eine der Adern gegen Erde kurzgeschlossen ist. Aber auch dann, wenn zum Zwecke der Leitungsprüfung eine Testvorrichtung in die Teilnehmerleitung eingeschleift werden soll oder beim Einschleifen von Signalen in die Teilnehmeranschlußleitung, beispielsweise externer Rufsignale, muß eine derartige Trennung möglich sein.

Bisher wurde eine Trennung der Leitungsadern von der Speiseschaltung aus solchen Gründen in Form einer galvanischen Abtrennung vorgenommen, wozu entweder mechanische Relais eingesetzt waren oder aber Schaltertransistoren eines elektronischen Koppelpunktes, über den eine Verbindung zwischen Speiseschaltung und Leitungsadern hergestellt war, betätigt wurden.

In beiden Fällen handelt es sich um Lösungen, die einen relativ großen Raumbedarf haben und wenig kostengünstig sind.

Die Aufgabe der Erfindung besteht daher darin, eine Schaltungsanordnung anzugeben, mit deren Hilfe das Problem der Trennung der Leitungsadern von der Speiseschaltung diesbezüglich günstiger gelöst werden kann.

Erfindungsgemäß wird dies bei einer Schaltungsanordnung der obengenannten Art dadurch erzielt, daß bei den als Endstufen der Spannungsquellen verwendeten Operationsverstärkern die Bezugsspannung der Steuereingänge der Endstufentransistoren abschaltbar ist, so daß das Potential an diesen Steuereingängen frei schwankt und die Transistoren auch bei Beaufschlagung durch Störspannungen größerer Amplitude als diejenige der üblichen Steuerspannungen gesperrt sind.

Bei der erfindungsgemäßen Lösung entfallen also Relais oder elektronische Koppelpunkte als für diesen Zweck vorzusehende zusätzliche Schaltelemente, die Abschaltung der Bezugsspannung läßt sich dagegen mit relativ geringem Aufwand und insbesondere bei geringem Platzbedarf realisieren.

Nachstehend wird die Erfindung anhand eines Ausführungsbeispieles unter Bezugnahme auf eine Zeichnung näher erläutert.

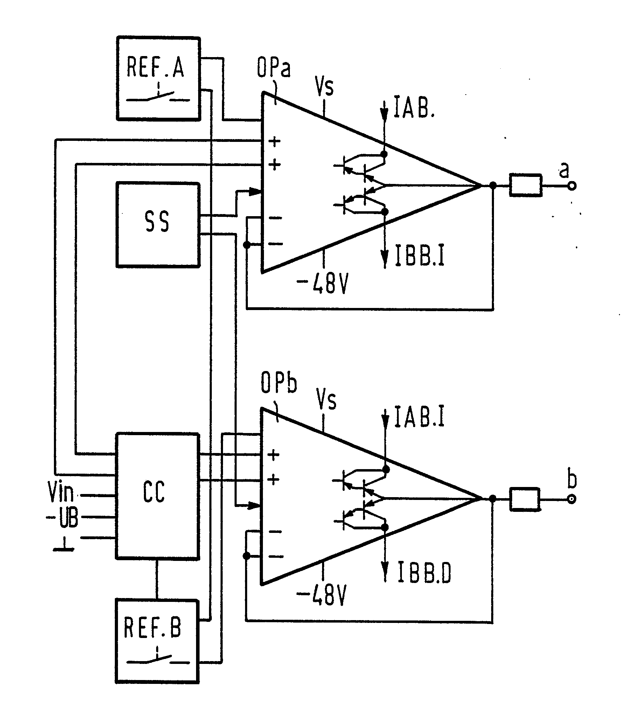

In der Zeichnung ist von der elektronischen Schnittstellenschaltung einer Teilnehmeranschlußschaltung zum Anschluß einer Teilnehmeranschlußleitung, also demjenigen Teil der Anschlußschaltung, der in erster Linie für die Teilnehmerspeisung, die Rufeinspeisung und die Signalisierung von und zu den Endgeräten verantwortlich ist, wiederum lediglich derjenige Teil dargestellt, soweit dies für das Verständnis der Erfindung erforderlich ist, der mit der Teilnehmerspei sung und der Signalübertragung vom Vierdrahtzweig der Teilnehmeranschlußschaltung zu den Adern a und b der Teilnehmeranschlußleitung TL dient.

Operationsverstärker OPa und OPb, deren Ausgänge mit den Adern a und b der Teilnehmeranschlußleitung TL verbunden sind, stellen Spannungsquellen dar, die zur Stromversorgung eine negative bzw. positive Versorgungsspannung an diese Adern legen.

Diese Operationsverstärker werden eingangsseitig unter anderem von den Ausgangssignalen einer Steuerschaltung CC beaufschlagt, an deren Eingänge auf dem sendeseitigen Vierdrahtzweig der Teilnehmeranschlußschaltung auftretende und für das Endgerät bestimmte Sprachsignale Vin gelangen. Die Steuerschaltung CC wird ferner von der Spannung UB der Speisebatterie beaufschlagt. Die Steuerschaltung CC moduliert demnach die von den Operationsverstärkern OPa und OPb an die Adern a und b der Teilnehmeranschlußleitung TL gelegten Versorgungsspannungen entsprechend dem Verlauf der zu übertragenden Spannungssignale.

Weitere Eingangssignale der Operationsverstärker OPa und Opb sind Ausgangssignale einer Schutzschaltung SS, deren Aufgabe es ist, im Überlastfall eine Stromnbegrenzung herbeizuführen.

Die in der Figur nur angedeuteten Endstufentransistoren Tr der Operationsverstärker werden an ihren Steuereingängen von Referenzspannungen beaufschlagt, die im einen Fall von einer Referenzspannungsquelle REFA und im anderen Fall von einer Referenzspannungsquelle REFB geliefert werden.

Diese Referenzspannungsquellen sind erfindungsgemäß selektiv einzeln oder gemeinschaftlich abtrennbar.

Wenn nun also eine Abtrennung von Teilnehmeranschlußleitung und daran angeschlossenem Endgerät von der Speiseschaltung vorgenommen werden soll, werden die Referenzspannungen REFA oder REFB oder beide Referenzspannungen von den Eingängen der Endstufentransistoren abgetrennt, so daß deren Steuerpotential frei schwimmt. Die Endstufentransistoren sind dann zumindest so lange gesperrt und liefern keinen Strom mehr an die Leitungsadern als evtl. an die Steuereingänge gelangende Störspannungen in ihrer Amplitude die Amplitude der von der Speisebatterie gelieferten Spannung nicht übersteigen. In diesem Zustand zeigen die Ausgangsstufen ein hochohmiges Verhalten in der Größenordnung von 10 MOhm, was einer galvanischen Trennung der Adern der Teilnehmeranschlußleitung von der Speiseschaltung entspricht und wozu bisher beispielsweise gesonderte Relais eingesetzt wurden.

Die Abtrennung der Versorgungsspannung kann, wie dargelegt, durch galvanische Abtrennung an den entsprechenden Eingangsanschlüssen der Operationsverstärker oder aber mit Hilfe von elektronischen Schaltern erfolgen, es ist jedoch auch möglich, die Abschaltfunktion in den Baustein zu integrieren, dem die Operationsverstärker angehören.

**Ansprüche**

1. Schaltungsanordnung zur Trennung der Adern einer Teilnehmeranschlußleitung eines digitalen Zeitmultiplex-Fernmeldenetzes, die über eine Teilnehmeranschlußschaltung mit elektronischer Schnittstellenschaltung an eine Vermittlungsstelle des Fernmeldenetzes angeschlossen sind, von der jeweils eine negative bzw. positive Versorgungsspannung liefernde Spannungsquelle für jede der beiden Adern umfassenden und Bestandteil der Schnittstellenschaltung darstellenden Speiseschaltung,
**dadurch gekenennzeichnet,**
daß bei den als Endstufen der Spannungsquellen verwendeten Operationsverstärkern (OPa, Opb) die Bezugssspannung (REFA, REFB) der Steuereingänge der Endstufentransistoren abschaltbar ist, so daß das Potential an diesen Steuereingängen frei schwankt und die Transistoren auch bei Beaufschlagung durch Störspannungen größerer Amplitude als diejenige der üblichen Steuerspannungen gesperrt sind.

2. Schaltungsanordnung nach Anspruch 1, **dadurch gekennzeichnet,** daß die Abschaltung der Bezugsspannung (REFA, REFB) wahlweise bei einer oder bei beiden der Spannungsquellen (OPa, OPb) erfolgen kann.

3. Schaltungsanordnung nach einem der Ansprüche 1 oder 2, **dadurch gekennzeichnet,** daß die Abschaltung der Bezugsspannung (REFA, REFB) galvanisch erfolgt.

4. Schaltungsanordnung nach einem der Ansprüche 1 oder 2, **dadurch gekennzeichnet,** daß die Abschaltung durch Betätigung eines Halbleiterschalters erfolgt.

5. Schaltungsanordnung nach Anspruch 4, **dadurch gekennzeichnet,** daß die Abtrennung der Bezugsspannung (REFA, REFB) durch Betätigung eines Halbleiterschalters erfolgt.

6. Schaltungsanordnung nach Anspruch 4, **dadurch gekennzeichnet,** daß die den Abtrennung dienenden Halbleiterschalter Bestandteil einer integrierten Schaltung sind, der auch die Operationsverstärker angehören.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | ELEKTRONIK, Band 30, Nr. 6, 1981, Seiten 73-79, München, DE; E. SCHMID et al.: "Integrierte Schaltungen für moderne Vermittlungssysteme" * Seite 74, rechte Spalte, Zeile 28 - Seite 75, linke Spalte, Zeile 22 * | 1 | H 04 M 3/00<br>H 04 M 19/00 |
| A | Idem | 2-6 | |
| A | EP-A-0 182 475 (AMERICAN TELEPHONE AND TELEGRAPH CO.) * Zusammenfassung * | 1 | |
| A | FR-A-2 382 810 (LABORATOIRE CENTRAL DE TELECOMMUNICATIONS) * Seite 4, Zeilen 33-40 * | 1,3,4 | |
| A | FR-A-2 418 576 (INTERNATIONAL STANDARD ELECTRIC) * Seite 5, Zeilen 16-28; Seite 6, Zeile 31 - Seite 7, Zeile 4 * | 1-6 | RECHERCHIERTE SACHGEBIETE (Int. Cl.4)<br><br>H 04 M |
| A | FR-A-2 382 815 (INTERNATIONAL STANDARD ELECTRIC) * Seite 10, Zeile 35 - Seite 11, Zeile 6 * | 1-6 | |

Der vorliegende Recherchenbericht wurde für alle Patentansprüche erstellt.

| Recherchenort | Abschlußdatum der Recherche | Prüfer |
|---|---|---|
| DEN HAAG | 01-10-1987 | VERSLYPE J.P. |